## Europäisches Patentamt

## European Patent Office

## Office européen des brevets

(19)

(11) Publication number: **0 192 282**
**B1**

(12)

# EUROPEAN PATENT SPECIFICATION

(45) Date of publication of the patent specification:
27.09.89

(51) Int. Cl.⁴: **G03D 3/06, G01F 23/72**

(21) Application number: **86200027.0**

(22) Date of filing: **09.01.86**

(54) **Liquid supply holder.**

(30) Priority: **24.01.85 NL 8500188**

(43) Date of publication of application:
**27.08.86 Bulletin 86/35**

(45) Publication of the grant of the patent:
**27.09.89 Bulletin 89/39**

(84) Designated Contracting States:
**AT BE CH DE FR GB IT LI NL SE**

(56) References cited:
**DE-A- 1 655 517**
**DE-A- 3 402 506**
**GB-A- 1 343 130**
**US-A- 3 366 276**
**US-A- 3 580 158**
**US-A- 3 698 454**
**US-A- 3 817 274**

(73) Proprietor: **Océ-Nederland B.V., St. Urbanusweg 43,
NL-5914 CC Venlo(NL)**

(72) Inventor: **Wijnen, Peter Johannes Antonius, Van
Goghstraat 41, NL-5961 AP Horst(NL)**

(74) Representative: **Hanneman, Henri W.A.M. et al,
Océ-Nederland B.V. Patents and Information
Postbus 101, NL-5900 MA Venlo(NL)**

ACTORUM AG

## Description

This invention relates to a liquid supply reservoir in a liquid-using machine, e.g. a diazo copying machine, which reservoir has at the top a closable opening in which there are detachably secured a pipe extending to near the base of the reservoir, and a liquid-level sensor device.

A supply reservoir of this kind is known from British patent specification No. 1 310 840. The reservoir described therein is provided with a lid which fits on the opening and which is provided with openings through which pass a liquid-level sensor device and pipes for introducing liquid into and taking it from the reservoir, the sensor device and pipes being secured to the lid.

Since, in this known reservoir, at least the discharge pipe secured to the lid must extend to close to the base of the reservoir to enable the reservoir to be emptied, and must therefore be rigid, the installed reservoir must, on replacement, be moved vertically downwards with respect to the lid for a distance which is at least equal to the maximum length by which a pipe part, or the liquid-level sensor device respectively, can project into the reservoir. If the lid is secured to the reservoir by a screw connection, the reservoir will also have to be rotated to detach it from the lid. A disadvantage of this known reservoir is that there must be a free space beneath an installed reservoir to enable this movement of the reservoir to be carried out. That also means that the reservoir cannot rest on a fixed support, and this is a disadvantage particularly in the case of full reservoirs, which are relatively heavy. Liquid can easily be spilled when a full reservoir of this kind is handled.

The object of this invention is to provide a liquid supply reservoir without the said disadvantages and which can therefore easily be replaced.

According to the invention this object is attained in a supply reservoir according to the preamble in that the pipe has outside the reservoir an open end along which a flexible conduit connected to the liquid-using machine can be passed to close to the base of the reservoir and in that the liquid-level sensor device forms a unit with the pipe.

The effect of this integration is that when the reservoir is detached from the pipe the reservoir can be held fast. The unit consisting of the pipe and liquid-level sensor device preferably fits with a slight play in the reservoir opening. Consequently the opening is utilized to the maximum and, for example, can be relatively small with respect to a liquid conduit fitted through the pipe opening.

In an attractive embodiment, the pipe has a part with a reduced section, a recess being formed on one side of the outside of the pipe and the liquid-level sensor device comprises a sensor for a low level and/or a sensor for a high level, the sensors respectively being secured to the pipe wall parts terminating the recess at the bottom and top respectively.

Other features and advantages of the invention will be explained in detail in the following description of a supply reservoir according to the invention, with reference to the accompanying drawings wherein:

Fig. 1 is a section through a reservoir according to the invention.

Fig. 2 is a top plan view of the reservoir according to Fig. 1.

Fig. 3 is a section according to line III-III in Fig. 1.

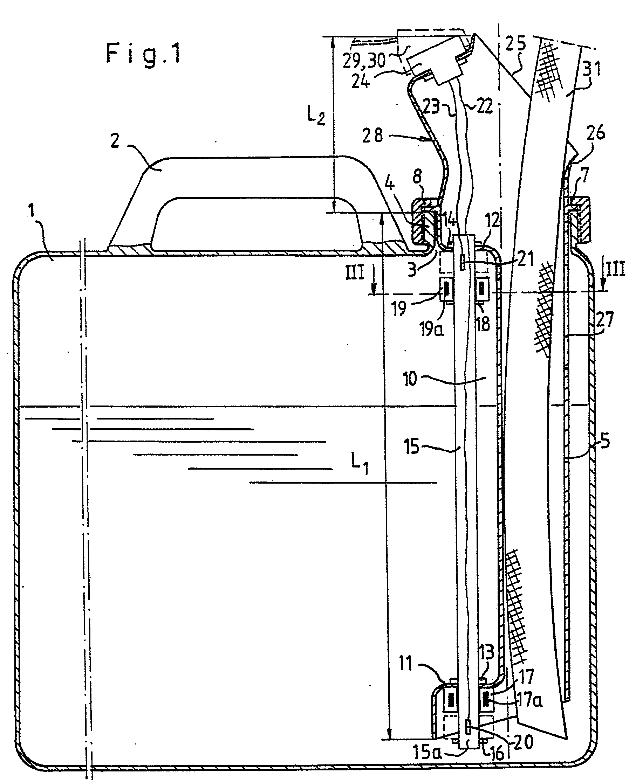

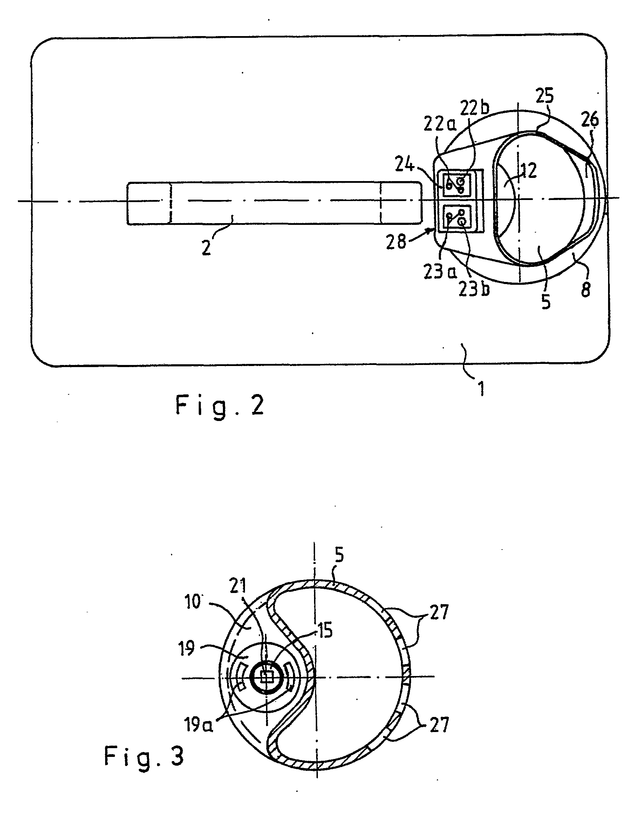

The supply reservoir represented in Figs. 1 and 2 comprises a tank 1, the effective capacity of which is a good 11 litres. Tank 1 is provided with a handle 2 and a round opening 3. Around the opening 3 is formed an upright edge 4 the outside of which is screwthreaded to receive a screw cap (not shown) which can close the tank 1 when not in use.

The supply reservoir also comprises a substantially round pipe 5 which over length $L_1$ has a cross-section of a maximum dimension somewhat less than the cross-section of the opening 3. The length $L_1$ is somewhat shorter than the distance from the top of the upright edge 4 to the base of the tank. A collar 7 is formed around the pipe at a distance $L_1$ from the bottom of the pipe and rests on the top of the upright edge 4. In any desired angular position the pipe 5 is detachably secured to the tank 1 by means of a screw ring 8 which on the one hand rests on the collar 7 and on the other hand co-operates with the screwthread on the upright edge 4.

The pipe wall is bent inwards over the majority of the length $L_1$ to form a recess 10. Viewed in a cross-sectional plane of the pipe, recess 10 is formed by a V-shaped pipe wall part in the otherwise circular pipe wall. The pipe wall parts which form the recess include an angle of 90° and extend from the circular pipe wall part to the centre of the circle as indicated in Fig. 3. Over the entire length $L_1$ the pipe 5 thus fits with a slight play into the round opening 3 and the pipe cannot be shifted laterally when passed through the opening 3, by which the liquid-level sensor 19 could be damaged. The recess 10 is closed at the bottom and top by pipe wall parts 11 and 12 respectively. Wall parts 11 and 12 are each provided with a hole 13 and 14 respectively in which a guide tube 15 is secured by means not shown. A part 15a of the tube 15 extends beneath the wall part 11. At some distance beneath wall part 11 a stop ring 16 is secured to tube end 15a. A float 17 is secured to tube part 15a and is freely slidable between stop ring 16 and wall part 11. At some distance beneath wall part 12 a stop ring 18 is secured to the guide tube 15. Between stop ring 18 and wall part 12 a float 19 is secured to be freely slidable on guide tube 15. Floats 17 and 19 are so adapted to the density of the liquid in the tank that in the immersed state they occupy a top position and in the non-immersed state a bottom position. A permanent magnet 17a and 19a respectively is disposed in each of the floats 17 and 19 respectively. A reed switch 20 and 21 respectively is fixed in the guide tube 15 level with each float and its contacts close when they come into the range of influence of the magnet in the associated float. An electrical signal is thus obtained when float 17 reaches the bottom position, representing a minimum level in the reservoir, and when float 19 comes in the top position, representing a maximum level in the reservoir. The reed switches 20 and 21 are respectively connected via leads 22 and 23 to contacts 22a and 23a of plug socket 24 secured to the outer wall of the part $L_2$ of the pipe projecting above the collar 7, on an inclined upwardly extending part of pipe wall part 28.

A locating hole 22b and 23b respectively is formed in the plug socket near each of the contacts 22a and 23a respectively. The float switches 20 and 21 can be connected via plug socket 24 by means of plug 29 and 30 respectively to the control system of a liquid-using machine near which the supply reservoir is placed.

Each plug 29 and 30 respectively is provided with a locating pin which fits only in the locating hole 22b and 23b respectively of the associated contact 22a and 23a respectively. As a result the plugs cannot be interchanged.

The top edge 25 of the pipe part $L_2$ lies in a plane which forms an angle of 45° to the longitudinal axis of the pipe 5. The lowest part of said edge 25 is formed into a pouring spout 26. Openings 27 are formed in the top part of the pipe part fitting into the reservoir and facilitate pouring as will be explained hereinafter. The wall 28 of the pipe 5 situated opposite pouring spout 26 is so profiled that screw ring 8 can easily be pushed over the top pipe part against collar 7 and screwed.

To conduct liquid from the reservoir to a liquid-using machine or to introduce liquid into the reservoir from a liquid-using machine, a flexible conduit 31 associated with said machine is fitted into the pipe 5.

If the above-described supply reservoir is used as a reservoir from which liquid is fed to the using machine, replacing the supply reservoir consists of replacing an empty tank by a full tank or of filling an empty tank. In the former case the hose 31 is taken out of the pipe 5 and the plugs 29 and 30 are removed from the socket 24, whereupon the tank can be replaced. In the latter case all that is necessary is to remove hose 31 from pipe 5 to enable the tank to be filled, e.g. via a filling hose or a funnel fitted into the pipe. When the cable connecting the plugs 29 and 30 to the signalling means is sufficiently long and flexible, the supply reservoir can be conveniently placed outside the using machine for filling, while the plug connection remains intact. Thus maximum filling can also be signalled on the using machine when filling takes place outside the machine.

When the supply reservoir is used as a supply reservoir for developing liquid in a diazo copying machine, the signalled minimum supply in the supply reservoir is set to 1 litre so that given a supply reservoir capacity of 11 litres it is possible to top up with a rounded quantity of 10 litres, which quantity corresponds to the normal packed quantity of developing powder for dissolving. It will be apparent that when the supply reservoir is used in this way there is no strict need for a sensor for detecting a maximum level.

If the supply reservoir described above is used for collecting liquid used in a liquid-using machine, a sensor for detecting a minimum level in a supply reservoir is of course unnecessary and all that is required is just one sensor for observing a maximum level in a reservoir. When the tank is full, and this is signalled by the maximum level detector, the full supply reservoir can easily be emptied, once hose 31 has been removed from pipe 5 and the plug connection released if necessary, by tilting the reservoir, whereupon the liquid flows via openings 27 from the tank chamber into the pipe 5 and from there via the pouring spout 26 out of the reservoir.

## Claims

1. A liquid supply reservoir in a liquid-using machine, e.g. a diazo copying machine, which reservoir has at the top a closable opening (3) in which there are detachably secured a pipe (5) extending to near the base of the reservoir, and a liquid-level sensor device (17, 19, 20, 21), characterised in that the pipe (5) has outside the reservoir an open end (25) along which a flexible conduit (31) connected to the liquid-using machine can be passed to close to the base of the reservoir and in that the liquid-level sensor device (17, 19, 20, 21) forms a unit with the pipe (5).

2. A supply reservoir according to claim 1, characterised in that the unit fits in the opening (3) with a slight play.

3. A supply reservoir according to claim 2, characterised in that the pipe (5) has a part with a reduced section, a recess (10) being formed on one side of the outside of the pipe (5) and in that the liquid-level sensor device (17, 19, 20, 21) comprises a sensor (17, 20) for a low level and/or a sensor for a high level (19, 21), the sensors respectively being secured to the wall parts (11, 12) terminating the recess (10) at the bottom and top respectively.

4. A supply reservoir according to claim 3, characterised in that when viewed in a cross-section of the pipe (5), the recess (10) is formed by a V-shaped pipe wall part in the otherwise circular pipe wall.

5. A supply reservoir according to any one of the preceding claims, characterised in that the pipe (5) is provided with a collar (7) which rests on the edge (4) of the opening (3) and which can be secured in any angular position.

6. A supply reservoir according to claim 5, characterised in that an end of the pipe (5) extends above the collar (7) and is provided with a pouring spout (26) and that at least one opening (27) is formed in the pipe wall in the top part of the pipe part fitting in the reservoir, said opening (27) being situated on the same side as the pouring spout (26) when viewed in the circumferential direction of the pipe.

7. A supply reservoir according to any one of the preceding claims, characterised in that the pipe (5) has, on the part (28) projecting from the reservoir, a plug socket (24) provided with contacts (22a, 23a) connected to signalling means for a low and high level respectively.

8. A supply reservoir according to claim 7, characterised in that the contacts consist of two groups (22a, 23a), which can each cooperate only with a plug (29 and 30 respectively) of corresponding configuration, the plug associated with the one group of contacts not fitting to the other group of contacts.

## Patentansprüche

1. Flüssigkeitszufuhrtank an einer eine Flüssigkeit gebrauchenden Maschine, z.B. einem Diazokopiergerät, welcher Tank auf seiner Oberseite eine verschliessbare Oeffnung (3) aufweist, in der ein Rohr (5), das sich bis nahe zum Boden des Tanks erstreckt, und eine Fühlereinrichtung (17, 19, 20, 21) für den Füllstand der Flüssigkeit lösbar befestigt sind, dadurch gekennzeichnet, dass das Rohr (5) ausserhalb des Tanks ein offenes Ende (25) aufweist, durch das eine mit der die Flüssigkeit gebrauchenden Maschine verbundene flexible Rohrleitung (31) bis nahe dem Boden des Tanks eingeführt werden kann, und dass die Fühlereinrichtung (17, 19, 20, 21) für den Füllstand der Flüssigkeit mit dem Rohr (5) eine Baueinheit bildet.

2. Zufuhrtank nach Anspruch 1, dadurch gekennzeichnet, dass die Baueinheit mit wenig Spiel in die Oeffnung (3) eingepasst ist.

3. Zufuhrtank nach Anspruch 2, dadurch gekennzeichnet, dass das Rohr (5) einen Teil mit einem verkleinerten Querschnitt aufweist, auf einer Seite der Aussenseite des Rohrs eine Einschnürung (10) eingeformt ist und dass die Fühlereinrichtung für den Füllstand (17, 19, 20, 21) einen Fühler (17, 20) für einen tiefen Füllstand und/oder einen Fühler (19, 21) für einen hohen Füllstand aufweist, welche Fühler an den Wandteilen (11, 12) befestigt sind, die das untere bzw. obere Ende der Einschnürung (10) bilden.

4. Zufuhrtank nach Anspruch 3, dadurch gekennzeichnet, dass im Querschnitt des Rohrs (5) gesehen die Einschnürung (10) von einem V-förmigen Rohrwandteil der sonst kreisförmigen Rohrwand gebildet ist.

5. Zufuhrtank nach irgendeinem der vorgängigen Ansprüche, dadurch gekennzeichnet, dass das Rohr (5) mit einem Bund (7) versehen ist, der auf dem Bord (4) der Oeffnung (3) aufliegt und in irgendeiner Winkelposition befestigt werden kann.

6. Zufuhrtank nach Anspruch 5, dadurch gekennzeichnet, dass ein Ende des Rohrs (5) über den Bund (7) vorsteht und mit einer Ausgussrinne (26) versehen ist und dass in der Rohrwand im oberen Teil des Rohrteils, der in den Tank eingeführt ist, mindestens eine Oeffnung (27) eingeformt ist, welche Oeffnung (27) in der Umfangsrichtung des Rohrs gesehen auf der gleichen Seite wie die Ausgussrinne (26) angeordnet ist.

7. Zufuhrtank nach irgendeinem der vorgängigen Ansprüche, dadurch gekennzeichnet, dass das Rohr (5) am Teil (28), der aus dem Tank vorsteht, eine Steckerbuchse (24) aufweist, die mit Kontakten (22a, 23a) versehen ist, die mit einer Einrichtung zum Anzeigen eines hohen bzw. niedrigen Füllstands verbunden sind.

8. Zufuhrtank nach Anspruch 7, dadurch gekennzeichnet, dass die Kontakte aus zwei Gruppen (22a, 23a) bestehen, von denen jede nur mit einem Stecker (29 bzw. 30) mit entsprechender Form zusammenwirken kann, und der der einen Gruppe von Kontakten zugeordnete Stecker nicht zur anderen Kontaktgruppe passt.

## Revendications

1. Réservoir d'alimentation en liquide pour machine utilisant un liquide, par exemple une machine de tirage diazo, ce réservoir comportant, à sa partie supérieure, une ouverture obturable (3) dans laquelle sont fixés, de manière amovible, un tuyau (5) s'étendant jusqu'à proximité de la base du réservoir et un dispositif détecteur de niveau de liquide (17, 19, 20, 21), caractérisé en ce que le tuyau (5) comporte, à l'extérieur du réservoir, une extrémité ouverte (25) suivant la longueur de laquelle on peut faire passer une tuyauterie souple (31) reliée à la machine utilisatrice de liquide jusqu'à proximité de la base du réservoir et en ce que le dispositif détecteur de niveau de liquide (17, 19, 20, 21) forme un ensemble unitaire avec ce tuyau (5).

2. Réservoir d'alimentation suivant la revendication 1, caractérisé en ce que l'ensemble unitaire s'engage dans l'ouverture (3) avec un léger jeu.

3. Réservoir d'alimentation suivant la revendication 2, caractérisé en ce que le tuyau (5) comporte une partie à section réduite, une partie en retrait (10) étant réalisée sur un côté de l'extérieur de ce tuyau (5), et en ce que le dispositif détecteur de niveau de liquide (17, 19, 20, 21) comprend un détecteur (17, 20) de niveau bas et/ou un détecteur de niveau haut (19, 21), ces détecteurs étant respectivement fixés sur les parties de paroi (11, 12) qui délimitent la partie en retrait (10) respectivement à la partie inférieure et à la partie supérieure.

4. Réservoir d'alimentation suivant la revendication 3, caractérisé en ce que, vue suivant une section transversale du tuyau (5), la partie en retrait (10) est formée par une partie de paroi du tuyau en V interposée sur la paroi du tuyau qui, en dehors d'elle, est circulaire.

5. Réservoir d'alimentation suivant l'une quelconque des revendications précédentes, caractérisé en ce que le tuyau (5) comporte une collerette (7) qui repose sur le bord (4) de l'ouverture (3) et qui peut être fixée dans n'importe quelle position angulaire.

6. Réservoir d'alimentation suivant la revendication 5, caractérisé en ce qu'une extrémité du tuyau (5) s'étend au-dessus de la collerette (7) et comporte un bec-verseur (26) et en ce qu'au moins une ouverture (27) est ménagée dans la paroi du tuyau dans la partie supérieure de la partie de ce tuyau qui est engagée dans le réservoir, cette ouverture (27) étant située sur le même côté, vu suivant la direction circonférencielle du tuyau, que le bec-verseur (26).

7. Réservoir d'alimentation suivant l'une quelconque des revendications précédentes, caractérisé en ce que, sur sa partie (28) faisant saillie à partir du réservoir, le tuyau (5) comporte une prise femelle (24) comprenant des contacts (22a, 23a) reliés à des moyens de signalisation respectivement d'un niveau bas et d'un niveau haut.

8. Réservoir d'alimentation suivant la revendication 7, caractérisé en ce que lesdits contacts sont constitués de deux groupes (22a, 23a) dont chacun ne peut coopérer qu'avec une prise mâle (respectivement 29 ou 30) d'une configuration correspondante, la prise mâle (respectivement 29 ou 30) d'une configuration correspondante, la prise mâle associée à l'un de ces groupes de contacts ne s'engageant sur l'autre groupe de contacts.

Fig.1

Fig. 2

Fig. 3